# EUROPEAN PATENT APPLICATION

(11) **EP 1 529 684 A1**
(43) Date of publication of application: **11.05.2005**
(21) Application number: 04078017.3
(22) Date of filing: 02.11.2004
(51) Int. Cl.: B60P 3/32, B62D 33/04, B62D 35/00, B62D 63/06

(54) **Loading platform**

(30) Priority: 06.11.2003 BE 200300600
(71) Applicant: N.V. Henschel Engineering S.A., naamloze vennootschap, 2610 Wilrijk (BE)
(72) Inventor: Noukens, Edwin Emiel Leontine, 2610 Wilrijk (BE)
(74) Representative: Donné, Eddy

(57) **Abstract**

Loading platform which is composed of standing panels, provided with end profiles (5 and 6) on their connecting far ends with which the above-mentioned panels (2, 3 and 4) are fixed to each other, characterised in that the above-mentioned end profiles (5 and 6) are fixed to the panels (2, 3 and 4) by means of glue.

## Description

The present invention concerns a loading platform.

More particularly, it concerns a loading platform for lorries, trailers and the like which is composed of standing panels provided with end profiles on their connecting far ends with which the above-mentioned panels are fixed to each other.

Loading platforms whose end profiles are fixed to the panels by means of what is called a rivet connection are already known.

Such known rivet connections are disadvantageous in that they can only be realised according to a partly automated process.

Another disadvantage is that such rivets always partly protrude, so that one can easily hurt oneself to it.

Yet another disadvantage is that, while driving or while manipulating the panels, forces created between the above-mentioned panels which are connected to each other on the one hand, and the rivets on the other hand, will be concentrated around the rivets, as a result of which peak loads may arise in these places which are responsible for the tearing of the material of the end profiles around the rivets.

An additional disadvantage is that, when the loading platform moves, sounds may occur due to rivet and chip residues which, in the case of hollow panel profiles, stay behind in the hollow spaces of these panels.

Yet another disadvantage is that no dustproof and water-tight sealing is obtained between the end profiles and the panels. In case the loading platform is exposed to precipitation, this may lead to water seeping in. Dirt may also penetrate between the above-mentioned end profiles and the standing panels.

Another additional disadvantage is that the look of the loading platforms is disturbed due to the presence of the rivets.

The present invention aims to remedy the above-mentioned and other disadvantages by providing a loading platform whereby the connection between the constituent panels and the end profiles provided on them is strong as the connection extends over a large surface.

To this end, the invention concerns a loading platform which is composed of standing panels, provided with end profiles on their connecting far ends with which the above-mentioned panels are fixed to each other and whereby the end profiles are fixed to the panels by means of glue.

An advantage is that one cannot hurt oneself to protruding rivets and that there are no irritating sounds.

Another advantage is that the above-mentioned connection can be realised according to a fully automated process.

Yet another advantage is that a dust-proof and water-tight sealing can be obtained between the end profiles and the standing panels.

An additional advantage is that the look of the loading platform is improved as there are no rivets.

In order to better explain the characteristics of the invention, the following preferred applications of a loading platform according to the invention are described as an example only, without being limitative in any way, with reference to the accompanying drawings, in which:
figure 1 schematically represents a loading platform for a lorry according to the invention in perspective;
figure 2 represents a practical embodiment of the part which is indicated by F2 in figure 1;
figure 3 represents a practical embodiment of the part which is indicated by F3 in figure 1;
figure 4 represents a section according to line IV-IV in figure 2;
figure 5 represents a section according to line V-V in figure 4;
figure 6 represents a practical embodiment of the part which is indicated by F6 in figure 5.

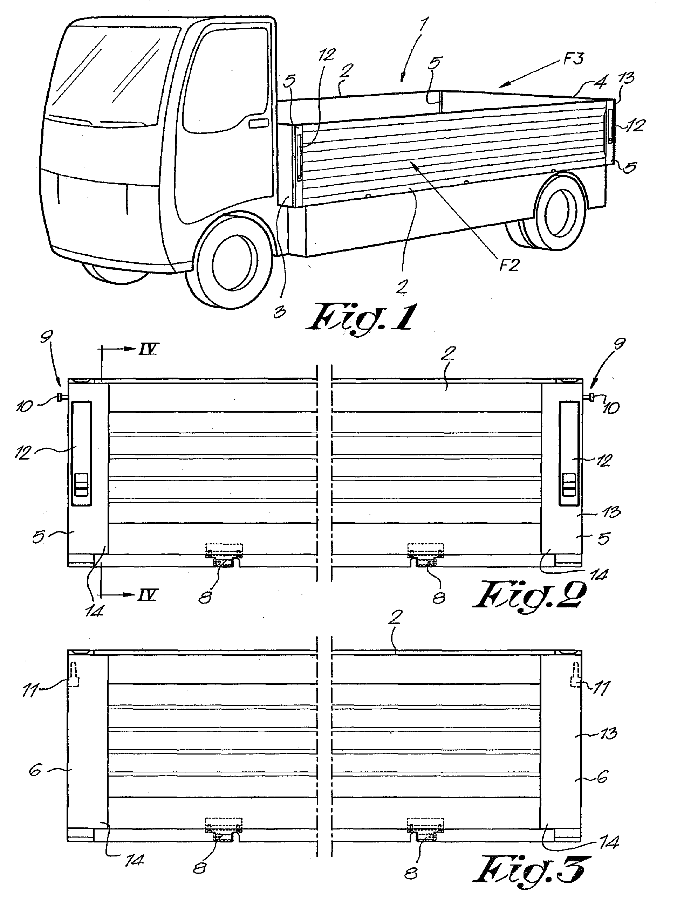

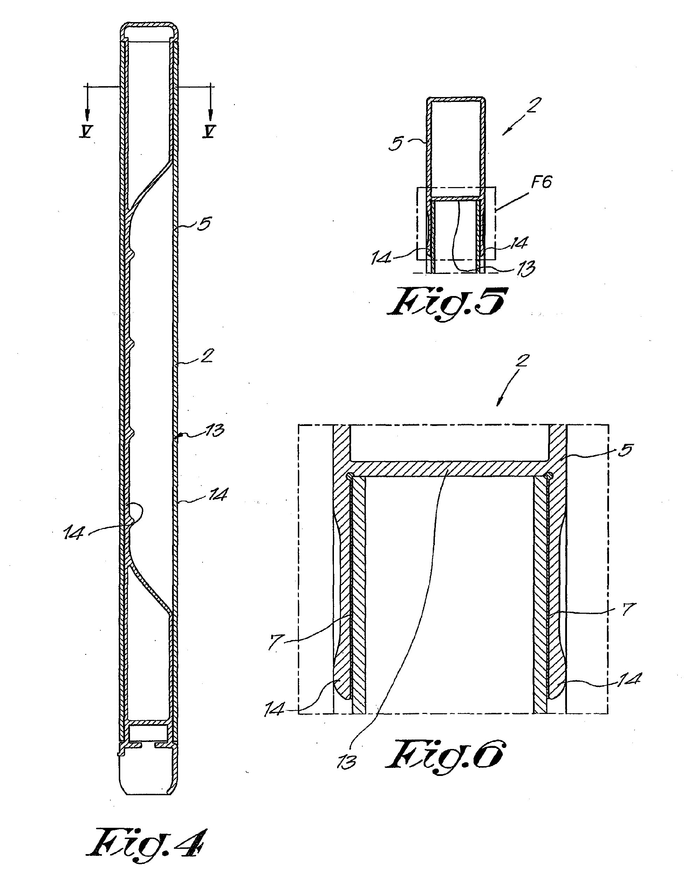

Figure 1 represents a lorry with a loading platform 1 according to the invention. This loading platform 1 is composed of two opposite standing side panels 2, which are connected to each other by a front panel 3 and a back panel 4 and a bottom which is not visible in the figure, whereby the above-mentioned panels 2, 3 and 4 are represented in detail in figures 2 and 3.

The standing panels 2, 3 and 4 are provided with end profiles 5 and 6 on both their far ends, which are fixed to the above-mentioned standing panels 2, 3 and 4 by means of a layer of glue 7 according to the invention, as represented among others in figure 6.

The side panels 2 and the back panel 4 can in this case be folded down by means of hinges 8 at the bottom of the panels 2 and 4, which hinges 8 are fixed to the above-mentioned bottom, as represented in figures 2 and 3.

The panels 2, 3 and 4 can be fixed to each other in a standing position by means of a fastening mechanism 9 which is integrated in the end profiles 5 of the side panels 2, whereby this fastening mechanism 9 is formed in the known manner of a pen 10 which can be shifted in height and which has a thickened far end, which pen 10 can work in conjunction with a groove 11 provided in the end profile 6 which is fixed to the front panel 3 and to the back panel 4.

The fastening mechanism 9 is further provided in the known manner with a handle 12 of a motion mechanism provided between the handle 12 and the shifting pen 10.

Figures 4 to 6 represent in detail that the panels 2, 3 and 4 are formed of hollow profiles, for example made of aluminium, and that the end profiles 5 and 6 are formed of a tubular body 13 with two laterally protruding parallel lips 14, whereby these end profiles 5 and 6 are provided with the above-mentioned lips 14 over the far ends of the panels 2, 3 or 4, and whereby the above-mentioned layer of glue 7 for fixing the end profiles 5 and 6 to the panels 2, 3 and 4 is provided, for example, between the panels 2, 3 and 4 and the above-mentioned lips 14.

As the end profiles 5 and 6 are fixed to the panels 2, 3 and 4 by means of a layer of glue 7, no cutting operations are required for the fixing, as is the case with rivets, such that in this manner is prevented that any rivet or chip residues would pile up in the cavities of the panels 2, 3 and 4.

The use of such a loading platform 1 is very simple and as follows.

Figure 1 represents a condition whereby the panels 2, 3 and 4 of the loading platform 1 are locked in relation to each other in a standing position, whereby the thickenings on the far ends of the pens 10 mesh in the grooves 11 in the known manner.

Starting from this condition in figure 1, the panels 2, 3 and 4 can be folded down before the loading, after unlocking the fastening mechanism 9, whereby, by manipulating the handle 12, the pens 10 can be lifted out of the grooves 11, such that the panels 2, 3 and 4 can be lowered.

After the loading, the panels 2, 3 and 4 are folded up again and locked. While driving, the panels 2, 3 and 4 are subjected to forces resulting from vibrations or shocks due to unevennesses in the road surface or the possible shifting of the load, such that compressive and tensile stresses are created between the panels 2 ,3 and 4 and the end profiles 5 and 6, especially at the glued joints.

The above-mentioned layer of glue 7, which is provided between the panels 2, 3 and 4 and the end profiles 5 and 6, preferably extends over the entire contact surface between the above-mentioned end profiles 5 and 6 and the lips 14, such that the above-mentioned forces are evenly distributed over the surface of the end profiles 5 and 6 and the panels 2, 3 and 4, and thus peak stresses are avoided, as may arise for example when the end profiles 5 and 6 on the panels 2, 3 and 4 are fixed only locally to each other by means of screws, rivets or the like.

Also, said gluing is advantageous in that no cracks will occur at the joint between the end profiles 5 and 6 and the panels 2, 3 and 4.

According to a variant of a loading platform 1 according to the invention, the end profiles are made such that the above-mentioned lips 14 can be fixed on the inside of hollow profiles of the panels 2, 3 and 4 by means of a layer of glue 7.

According to yet another variant, the lips 14 are not provided on the end profiles 5 and 6, but the panels 2, 3 and 4 are provided with lips, whereby the lips 14 are glued on the inside or on the outside of the end profiles 2, 3 and 4.

Although an embodiment is represented in the figures whereby the loading platform 1 is built up of four panels 2, 3 and 4 which can be folded down, it is not excluded that such a loading platform 1 comprises for example only three standing panels 2 and 3, whereby, in this case, the rear end profiles 5 on the side panels 2 may possibly serve as ornaments for finishing the loading platform 1.

Neither is it excluded that the panels are not hinge-mounted, but are connected to each other in a fixed manner by means of a glue or other fixing means.

The present invention is by no means limited to the embodiments given as an example and represented in the accompanying drawings; on the contrary, such a loading platform according to the invention can be made in all sorts of shapes and dimensions while still remaining within the scope of the invention.

## Claims

1. Loading platform which is composed of standing panels, provided with end profiles (5 and 6) on their connecting far ends with which the above-mentioned panels (2, 3 and 4) are fixed to each other, **characterised in that** the above-mentioned end profiles (5 and 6) are fixed to the panels (2, 3 and 4) by means of glue.

2. Loading platform according to claim 1, **characterised in that** the layer of glue (7) is provided over the entire height or over practically the entire height of the end profiles (5 and 6) and over the entire or practically the entire width of the lips (14) .

3. Loading platform according to claim 1, **characterised in that** the above-mentioned end profiles (5 and 6) are formed of a tubular body (13) with two laterally protruding parallel lips (14), whereby the layer of glue 7 is provided between these lips (14) and the panels (2, 3 and 4) .

4. Loading platform according to claim 1, **characterised in that** the above-mentioned standing panels (2, 3 and 4) are formed of hollow profiles and **in that** the end profiles (5 and 6) are provided over the far end of a panel (2, 3 or 4) and thus cover the far ends of the panels (2, 3 and 4) practically entirely.
